# NEUE EUROPÄISCHE PATENTSCHRIFT

(11) **EP 0 898 681 B2**
(45) Veröffentlichungstag und Bekanntmachung des Hinweises auf die Entscheidung über den Einspruch: **01.10.2003**
(45) Hinweis auf die Patenterteilung: 09.08.2000
(21) Anmeldenummer: 97924912.5
(22) Anmeldetag: 23.05.1997
(51) Int. Cl.: F21W 111/06, B64F 1/20

(54) **UNTERFLURFEUER**
FLUSH LIGHTING
FEU ENCASTRE

(30) Priorität: 23.05.1996 DE 19620827
(43) Veröffentlichungstag der Anmeldung: 03.03.1999
(73) Patentinhaber: SIEMENS AKTIENGESELLSCHAFT, 80333 München (DE)
(72) Erfinder: VANDEREN, Michel, B-1150 Brüssel (BE); VANDEVOORDE, Jean-Claude, B-1820 Steenkokkerzeel (BE)
(86) Internationale Anmeldenummer: DE9701047
(87) Internationale Veröffentlichungsnummer: WO97044612

(56) Entgegenhaltungen:
- EP-A- 0 202 335
- EP-A- 0 390 479
- WO-A1-96/02970
- DE-A- 4 438 489
- FR-A- 2 690 468
- GB-A- 2 207 992

## Beschreibung

Die Erfindung bezieht sich auf ein Unterflurfeuer in der Farbe weiß oder in Signalfarben, wie rot, grün, blau oder gelb.

Bekannte derartige Unterflurfeuer z.B. für Flughäfen, die insbesondere für die Markierung von Start-, Landebahnen und Taxiways zum Einsatz kommen, haben als Lichtquellen herkömmliche Glüh- oder Wolframhalogenlampen.

Derartige Lichtquellen müssen in Kombination mit optischen Strahlungsfiltern eingesetzt werden, wenn Beleuchtungs- oder Signaleinrichtungen Licht mit einer bestimmten Farbe abstrahlen sollen, was insbesondere bei der Regelung des auf Flughäfen stattfindenden Verkehrs von größter Bedeutung ist. Da zur Farberzeugung bestimmte, zuweilen beträchtliche, Anteile des von Glüh- oder Wolframhalogenlampen abgestrahlten Lichts abgefiltertwerden müssen, müssen derartige Leuchteinrichtungen so ausgestaltet werden, daß sie vergleichsweise große Wärmemengen, die aus der Erzeugung eigentlich nicht benötigten Lichts entstehen, abführen können. Darüber hinaus haben derartige Leuchteinrichtungen einen vergleichsweise geringen energetischen Wirkungsgrad, da nur ein vergleichsweise geringer Anteil des insgesamt in der Leuchteinrichtung erzeugten Lichts für die Abstrahlung in der jeweils erforderlichen Farbe benötigt wird.

Der Erfindung die Aufgabe zugrunde, ein Unterflurfeuer der eingangs geschilderten Art zu schaffen, das einen höheren energetischen Wirkungsgrad aufweist, die kompakter ausgestaltet werden kann und die eine höhere Lebensdauer aufweist.

Die Aufgabe wird erfindungsgemäß dadurch gelöst, daß als Lichtquelle des Unterflurfeuers Halbleiterelemente, insbesondere LED's, verwendet werden, die in zumindest einem Bündel bzw. Cluster angeordnet sind und vor denen eine die Abstrahlung optisch beeinflussende Abdeckplane angeordnet ist, die zur Bündelung und Abstrahlungrichtungs Bestimmung geeignet ist. Als derartige als Lichtquelle einsetzbare Halbleiterelemente können heute zur Verfügung stehende helle und superhelle LED's eingesetzt werden. Derartige Unterflurfeuer sollen insbesondere auf Flughäfen installiert werden.

Durch die, insbesondere leicht reinigbare, zur Bündely und Abstrahlrichtungsbestinmmung geeignete Abdeckplatte, Können Strahlenbrechung und Totalreflexion eingesetzt werden, um den die Beleuchtungseinrichtung verlassenden Uchtstrahl optimal auszubilden. Hierdurch kann den unterschiedlichsten Anforderungen Genüge getan werden.

Durch den Einsatz erfindungsgemäßer Unterflurfeuer wird die Möglichkeit eröffnet, daß durch Lichtquellen der Leuchteinrichtung das angeforderte Farbsignal ohne zusätzliche optische Strahlungsfilterung erzeugt wird. Derartige Halbleiterelemente können zwischen sehr niedrigen und einem sehr hohen Potential elektrisch geregelt werden, wobei der Wellenlängenbereich, in dem das jeweilige Halbleiterelement Licht abstrahlt, sowohl hinsichtlich seiner Position als auch hinsichtlich seiner Weite durchweg konstant bleibt. Hieraus ergibt sich u.a., daß seitens der erfindungsgemäß als Lichtquelle eingesetzten Halbleiterelemente lediglich Lichtenergie in der Farbe erzeugt wird, die dem angeforderten Farbsignal entspricht. Außerhalb des sichtbaren Bereichs wird seitens der erfindungsgemäß als Lichtquellen zum Einsatz kommenden Halbleiterelemente kaum Energie erzeugt; dies gilt insbesondere für Infrarot- oder Ultraviolettstrahlung, die lediglich in nicht spürbaren Mengen erzeugt werden. In dem erfindungsgemäße Unterflurfeuer wird somit ein hoher Wirkungsgrad bei der Umwandlung der das Unterflurfeuer betreibenden Energie in Lichtenergie erzielt. Dieser Effekt wird durch den erfindungsgemäß möglichen Verzicht auf Farbfilter erhöht, da der Einsatz von Farbfiltem naturgemäß mit einer Energieabschwächung einherginge. Aufgrund ihrer Ausgestaltung als Halbleiterelemente sind die Lichtquellen des erfindungsgemäßen Unterflurfeuers innerhalb von Mikrosekunden regelbar, im Vergleich zu Sekunden im Falle von Glüh- oder Wolframhalogenlampen; diese Eigenschaft ist bei durch Unterflurfeuer gebildeten Signal- und Markierungsinstallationen auf Flughäfen von besonderer Bedeutung. Als Halbleiterelemente ausgebildete Lichtquellen haben eine Lebenserwartung, die im Bereich einer Größenordnung oberhalb der von Wolframhalogen- und Glühlampen liegt. Der Aufwand für Wartung und Ersatz von erfindungsgemäßen Unterflurfeuer kann somit im Vergleich zum Stand der Technik erheblich reduziert werden.

Eine weitere Vereinfachung der Instandhaltung ergibt sich bei einervorteilhaften Ausführungsform der erfindungsgemäßen Unterflurfeuer bei der jeweils ein Bündel bzw. Cluster eine auswechselbare Einheit darstellt, die insbesondere in Kartuschenform ausgebildet sein kann. Der Ersatz bzw. Austausch eines defekten Bündels bzw. Clusters ist dann bei minimalem Aufwand durchführbar.

Zweckmäßigerweise sind die einzelnen Cluster bzw. Bündel oder Kartuschen vergossen oder gespritzt ausgebildet, wobei als Werkstoff insbesondere ein recyclebarer Kunststoff zum Einsatz kommen kann. Ein derartiger nichtmetallischer Werkstoff kann zum Ausfüllen und ggf. auch zur Ausgestaltung des Grundkörpers bzw. des Gehäuses der erfindungsgemäßen Unterflurfeuer eingesetzt werden, da aufgrund der erfindungsgemäß als Lichtquelle vorgesehenen Halbleiterelemente lediglich mittlere Temperaturen auftreten, die von derartigen Werkstoffen auch langfristig ohne Funktionsbeeinträchtigung ausgehalten werden können. Somit können erfindungsgemäß korrosionsbeständige Unterflurfeuer geschaffen werden, deren Herstellung weit weniger kostenaufwendig ist als die von Unterflurfeuern gemäß dem Stand der Technik, bei denen der Einsatz der erwähnten Werkstoffe nicht praktikabel ist, da die dort als Lichtquellen eingesetzten Wolframhalogen- und Glühlampen zu hohe Temperaturen erzeugen. Durch den vorteilhaften Einsatz nichtmetallischer Werkstoffe zum Ausfüllen und ggf. auch zur Herstellung der erfindungsgemäßen Unterflurfeuer wird galvanische Korrosion praktisch vollständig ausgeschlossen, da die eingesetzten Werkstoffe elektrisch isolierend sind. Aufgrund der vorteilhaften Formbarkeitseigenschaften der einsatzfähigen Werkstoffe ergibt sich eine beträchtliche Reduzierung der aufzuwendenden Kosten. Die eingesetzten Werkstoffe können vorteilhaft als Wärmeleiter dienen, wodurch die von den Lichtquellen abgestrahlte Wärme zur Gehäuseaußenwand der Unterflurfeuer und zur Fahrbahn abgeleitet werden kann. Da, wie bereits erwähnt, der gesamte Körper bzw. ggf. das gesamte Gehäuse der erfindungsgemäßen Unterflurfeuer ein Isolator ist, ist kein kostenaufwendig ausgestalteter separater Isolator erforderlich.

Wenn die Bündel bzw. Cluster oder Kartuschen der erfindungsgemäßen Unterflurfeuer als Bestandteile eines redundant arbeitenden Systems ausgebildet sind, wird eine Ausgestaltung der erfindungsgemäßen Unterflurfeuer erreicht, die sich aus Anordnungen elektronisch gesteuerter Einzelvorrichtungen zusammensetzt, wobei aufgrund des redundanten Betriebs dieser elektronisch gesteuerten Vorrichtungen ein Totalausfall der erfindungsgemäßen Unterflurfeuer sicher ausgeschlossen werden kann. Zumindest eine erhebliche Anzahl Cluster bleiben bei der redundanten Ausführung stets funktionsfähig.

Wenn die erfindungsgemäßen Unterflurfeuer weißes Licht durch eine Mischung unterschiedlicher Farben und farbiges Licht durch entsprechend abstrahlende spezielle Halbleiterelemente erzeugen ist es bei entsprechender Regelung möglich, das von dem Unterflurfeuer abgestrahlte Licht hinsichtlich seiner Farbe und/oder seiner Intensität beliebig einzustellen.

Hierbei weisen die erfindungsgemäßen Unterflurfeuer vorteilhafterweise eine steuerbare Energieversorgung auf, mittels der ein Dimmen und/oder schnelles Schalten der Unterflurfeuer ermöglicht wird.

Mit geringem Aufwand ist ein erfindungsgemäßes Unterflurfeuer realisierbar, wenn die einzelnen Halbleiterelemente ohne Fassungen verwendet werden.

Zweckmäßigerweise sollten die einzelnen Halbleiterelemente ganz- oder teilautomatisch hantierbar ausgebildet sein.

Wenn die Halbleiterelemente der erfindungsgemäßen Unterflurfeuer in einem Füllkörper eingebettet angeordnet sind, der eine Lichtaustrittsöffnung freiläßt, ergibt sich eine erheblich verbesserte Lastübertragung zwischen einem Flugzeug und der Fahrbahn, da kein hohler Konvektionsraum erforderlich ist, was bei Unterflurfeuem gemäß dem Stand der Technik, die in der Regel metallische Gehäuse aufwiesen, der Fall war. Sofem die äußeren Oberflächen der optischen Elemente glatt und hart ausgestaltet sind, kann des erfindungsgemäße Unterflurfeuer mit geringem Aufwand gereinigt werden.

Gemäß einer vorteilhaften Ausgestaltung des erfindungsgemäßen Unterflurfeuers sind die zu Clustem bzw. Bündeln, insbesondere in Kartuschenform, vereinigten Halbleiterelemente, bei denen es sich beispielsweise um LED's handelt, mit dem Gehäuse des Unterflurfeuers als kompakte Einheit ausgestaltet.

Die LED's können vorteilhafterweise auch aus einem organischen Werkstoff, z.B. aus Kunststoff, hergestellt sein.

Im folgenden wird die Erfindung an Hand einer Ausführungsform unter Bezugnahme auf die Zeichnung näher erläutert. Es zeigen:
- FIG 1: eine prinzipielle Darstellung eines erfindungsgemäßen Unterflurfeuers
- FIG 2: eine Prinzipdarstellung einer Vorderansicht eines Clusters bzw. Bündels der ertindungsgemäßen Leuchteinrichtung;
- FIG 3: eine Prinzipdarstellung einer Seitenansicht des in FIG 2 gezeigten Bündels bzw. Clusters und
- FIG 4: eine Prinzipdarstellung einer Draufsicht auf das in den FIG 2 und 3 dargestellte Cluster bzw. Bündel.

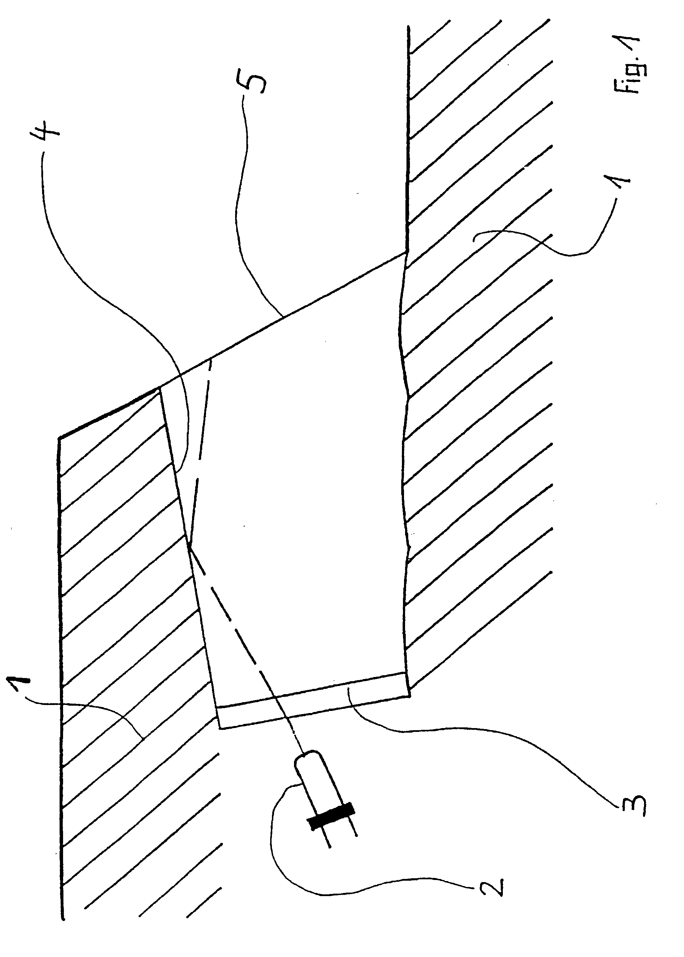

Ein in FIG 1 prinzipiell dargestelltes erfindungsgemäßes Unterflurfeuer hat ein innerhalb eines Installationskörpers bzw. eines Installationsgehäuses 1 aufgenommene Halbleiterlichtquelle 2. Der Halbleiterlichtquelle 2 vorgeordnet ist eine optische Einrichtung 3 zur Strahlenbildung. Das durch die Halbleiterlichtquelle 2 erzeugte Licht wird an einer Totalreflexionsoberfläche 4 totalreflektiert, bevor es durch eine glatte Außenoberfläche 5 aus der Leuchteinrichtung austritt.

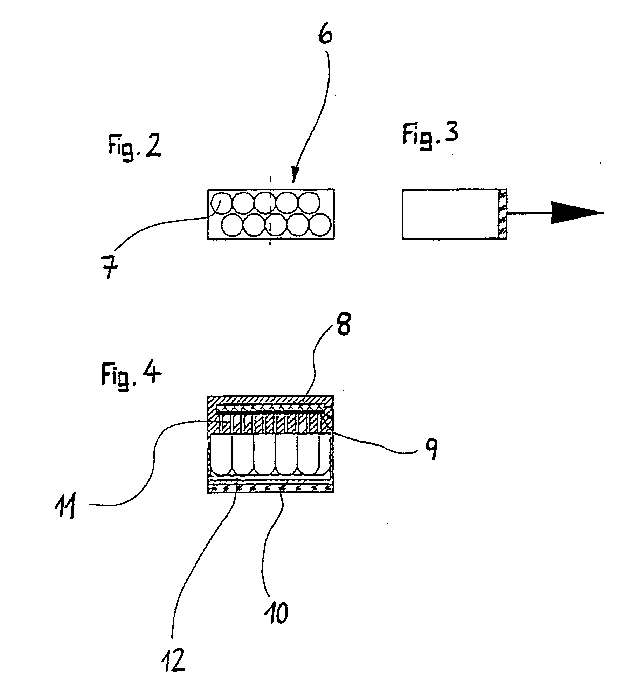

Die Halbleiterlichtquelle 2 setzt sich aus Clustem bzw. Bündeln 6 zusammen, von denen eines an Hand der FIG 2 bis 4 im Prinzip dargestellt ist. Zu einem Cluster bzw. Bündel 6 gehören Halbleiterelemente 7, die im dargestellten Ausführungsbeispiel in zwei übereinander angeordneten Reihen nebeneinander angeordneter Halbleiterelemente 7 vorgesehen sind. Die Halbleiterelemente 7 eines Clusters 6 sitzen auf einer gemeinsamen Elementhalterung 8, deren halbleiterelementseitige Oberfläche als Reflexionsfläche 9 ausgebildet ist, um den geringen Strahlungsanteil, der von den Halbleiterelementen 7 in rückwärtiger Richtung abgegeben wird, in Richtung auf eine frontseitige Öffnungsfläche des Bündels bzw. Clusters 6 umzulenken. Die frontseitige Öffnungsfläche ist mittels einer Glasscheibe 10 geschlossen.

Der die, wie vorstehend beschrieben, angeordneten Halbleiterelemente 7 aufnehmende Raum wird weitestgehend durch ein transparentes Kunststoffmaterial 11 ausgefüllt, wobei vor den auf die Glasscheibe 10 gerichteten ausgangsseitigen Enden der Haibleiterelemente 7 ein Hohlraum 12 vorgesehen ist, der im Vergleich zu dem von dem vorstehend geschilderten Cluster 6 eingenommenen Raum klein ist.

## Patentansprüche

1. Unterflurfeuer für Flughäfen in der Farbe weiß oder in Signalfarben, wie rot, grün, blau oder gelb,
**dadurch gekennzeichnet, dass** als Lichtquelle Halbleiterelemente (7), insbesondere LED's, vorhanden sind, die in zumindest einem Bündel (Cluster) (6) angeordnet sind und vor denen eine die Abstrahlung optisch beeinflussende Abdeckplatte (3) angeordnet ist, die zur Bündelung und Abstrahlrichtungsbestimmung geeignet ist.

2. Unterflurfeuer nach Anspruch 1, **dadurch gekennzeichnet, daß** vorzugsweise jeweils ein Cluster eine insbesondere in Kartuschenform ausgebildete, auswechselbare Einheit darstellt.

3. Unterflurfeuer nach Anspruch 1 oder 2, **dadurch gekennzeichnet, daß** die einzelnen Cluster oder Kartuschen vergossen oder gespritzt ausgebildet sind, insbesondere aus einem recyclebaren Kunststoff vergossen oder gespritzt ausgebildet sind.

4. Unterflurfeuer nach Anspruch 3, **dadurch gekennzeichnet, daß** der Kunststoff gut wärmeleitend ausgebildet ist.

5. Unterflurfeuer nach Anspruch 3 oder 4, **dadurch gekennzeichnet, daß** der Kunststoff druckfest ausgebildet ist.

6. Unterflurfeuer nach Anspruch 1, 2, 3, 4 oder 5, **dadurch gekennzeichnet, daß** die Cluster oder Kartuschen als Bestandteile eines redundant arbeitenden Systems ausgebildet sind.

7. Unterflurfeuer nach einem oder mehreren der vorhergehenden Ansprüche, **dadurch gekennzeichnet, daß** mittels seiner weißes Licht durch eine Mischung unterschiedlicher Farben oder farbiges Licht durch entsprechend abstrahLande spezielle Halbleiter erzeugbar ist.

8. Unterflurfeuer nach einem oder mehreren der vorhergehenden Ansprüche, **dadurch gekennzeichnet, daß** es eine steuerbare Energieversorgung aufweist, die ein Dimmen und/oder schnelles Schalten ermöglicht.

9. Unterflurfeuer nach einem oder mehreren der vorhergehenden Ansprüche, **dadurch gekennzeichnet, daß** die einzelnen Halbleiter fassungsfrei ausgebildet sind.

10. Unterflurfeuer nach einem oder mehreren der vorhergehenden Ansprüche, **dadurch gekennzeichnet, daß** die einzelnen Halbleiter ganz- oder teilautomatisch hantierbar ausgebildet sind.

11. Unterflurfeuer nach einem oder mehreren der vorhergehenden Ansprüche, **dadurch gekennzeichnet, daß** die Halbleiter in einem Füllkörper eingebettet angeordnet sind, der eine Lichtaustrittsöffnung freiläßt.

12. Unterflurfeuer nach einem oder mehreren der vorhergehenden Ansprüche,
**dadurch gekennzeichnet, dass** die vor den Halbleitern angeordnete Abdeckplatte leicht reinigbar ist.

13. Unterflurfeuer für den Einsatz auf einem Flughafen insbesondere nach einem oder mehreren der vorhergehenden Ansprüche, **dadurch gekennzeichnet, daß** in ihm zu Clustern, insbesondere in Kartuschenform, vereinigte Halbleiter, z.B. LED's, als Lichtquellen angeordnet sind und mit dem Gehäuse des Unterflurfeuers eine kompakte Einheit bilden.

14. Unterflurfeuer nach Anspruch 13, **dadurch gekennzeichnet, daß** die LED's aus anorganischem oder organischem Material (Kunststoff) sind.

## Claims

1. Airport flush-marker light in the colour white or in signal colours such as red, green, blue or yellow, **characterized in that** present as light source are semiconductor elements (7), in particular LEDs which are arranged in at least one cluster (6) and arranged in front of which is a cover plate (3) optically influencing the emission and suitable for focusing and determining the direction of emission.

2. Flush-marker light according to Claim 1, **characterized in that** preferably in each case a cluster constitutes an exchangeable unit designed, in particular, in cartridge form.

3. Flush-marker light according to Claim 1 or 2, **characterized in that** the individual clusters or cartridges are cast or injection moulded, in particular are cast or injection moulded from a recyclable plastic.

4. Flush-marker light according to Claim 3, **characterized in that** the plastic is designed as a good thermal conductor.

5. Flush-marker light according to Claim 3 or 4, **characterized in that** the plastic is of pressure-resistant design.

6. Flush-marker light according to Claim 1, 2, 3, 4 or 5, **characterized in that** the clusters or cartridges are designed as components of a redundantly operating system.

7. Flush-marker light according to one or more of the preceding claims, **characterized in that** it can be used to produce white light by mixing different colours or coloured light with the aid of appropriately emitting special semiconductors.

8. Flush-marker light according to one or more of the preceding claims, **characterized in that** it has a controllable energy supply which permits dimming and/or quick switching.

9. Flush-marker light according to one or more of the preceding claims, **characterized in that** the individual semiconductors are designed without holders.

10. Flush-marker light according to one or more of the preceding claims, **characterized in that** the individual semiconductors are designed with the capacity to be handled entirely automatically or semiautomatically.

11. Flush-marker light according to one or more of the preceding claims, **characterized in that** the semiconductors are arranged embedded in a filling body which exposes a light exit opening.

12. Flush-marker light according to one or more of the preceding claims, **characterized in that** the cover plate arranged in front of the semiconductors can be easily cleaned.

13. Flush-marker light for use at an airport, in particular according to one or more of the preceding claims, **characterized in that** semiconductors, for example LEDs, united to form clusters, in particular in cartridge form, are arranged in it as light sources and form a compact unit with the housing of the flush-marker light.

14. Flush-marker light according to Claim 13, **characterized in that** the LEDs are made from inorganic or organic material (plastic).

## Revendications

1. Feu encastré pour aéroports de couleur blanche ou dans des couleurs de signalisation, comme le rouge, le vert, le bleu ou le jaune, **caractérisé en ce qu'**il est présent comme sources lumineuses des éléments à semi-conducteurs, notamment des diodes électroluminescentes, qui sont disposées en au moins un faisceau (cluster) et devant lesquelles est montée une plaque (3) de recouvrement influençant de manière optique le rayonnement qui est approprée à la mise en faisceau et à la détermination de la direction d'émission.

2. Feu encastré suivant la revendication 1, **caractérisé en ce que**, de préférence, un cluster représente une unité interchangeable, notamment réalisée sous forme de cartouche.

3. Feu encastré suivant la revendication 1 ou 2, **caractérisé en ce que** les clusters ou cartouches individuelles sont scellés ou moulés par injection, notamment scellés ou moulés par injection dans une matière plastique recyclable.

4. Feu encastré suivant la revendication 3, **caractérisé en ce que** la matière plastique est réalisée de manière à être bonne conductrice de la chaleur.

5. Feu encastré suivant la revendication 3 ou 4, **caractérisé en ce que** la matière plastique est réalisée de manière à résister à la pression.

6. Feu encastré suivant la revendication 1, 2, 3, 4 ou 5, **caractérisé en ce que** les clusters ou cartouches sont réalisés comme composants d'un système travaillant de manière redondante.

7. Feu encastré suivant l'une ou plusieurs des revendications précédentes, **caractérisé en ce qu'**il peut être produit par ce feu de la lumière blanche en mélangeant des couleurs différentes ou de la lumière colorée par des semi-conducteurs spéciaux émettant de manière adéquate.

8. Feu encastré suivant l'une ou plusieurs des revendications précédentes, **caractérisé en ce qu'**il a une alimentation en énergie qui peut être commandée et qui permet de faire varier la luminosité et/ou de brancher/débrancher rapidement.

9. Feu encastré suivant l'une ou plusieurs des revendications précédentes, **caractérisé en ce que** les semi-conducteurs individuels sont réalisés en étant exempts de monture.

10. Feu encastré suivant l'une ou plusieurs des revendications précédentes, **caractérisé en ce que** les semi-conducteurs individuels sont réalisés de manière à pouvoir être manipulés totalement ou partiellement automatiquement.

11. Feu encastré suivant l'une ou plusieurs des revendications précédentes, **caractérisé en ce que** les semi-conducteurs sont enrobés dans un élément d'encastrage qui laisse dégagée une ouverture de sortie de la lumière.

12. Feu encastré suivant l'une ou plusieurs des revendications précédentes, **caractérisé en ce que** la plaque de recouvrement, montée devant les semi-conducteurs, peut être facilement nettoyée.

13. Feu encastré pour l'utilisation sur un aéroport, notamment suivant l'une ou plusieurs des revendications précédentes, **caractérisé en ce qu'**il y est monté comme sources lumineuse des semi-conducteurs, par exemple des diodes électroluminescentes, réunies en clusters, notamment sous la forme de cartouches, et **en ce que** ces semi-conducteurs forment une unité peu encombrante avec le boîtier du feu encastré.

14. Feu encastré suivant la revendication 13, **caractérisé en ce que** les diodes électroluminescentes sont en un matériau minéral ou organique (matière plastique).
